# FASCICULE DE BREVET EUROPEEN

(11) **EP 3 646 445 B1**
(45) Date de publication et mention de la délivrance du brevet: **03.09.2025**
(21) Numéro de dépôt: 18726463.5
(22) Date de dépôt: 22.05.2018
(51) Int. Cl.: H02K 5/22, H02K 11/30, F02N 11/04, F02N 15/00

(54) **ASSEMBLAGE MECANIQUE AVEC ISOLATION ELECTRIQUE ENTRE UNE MACHINE ELECTRIQUE TOURNANTE ET SA PARTIE ELECTRONIQUE**
MECHANISCHE ANORDNUNG MIT ELEKTRISCHER ISOLIERUNG ZWISCHEN EINER ELEKTRISCHEN DREHMASCHINE UND IHREM ELEKTRONISCHEN TEIL
MECHANICAL ASSEMBLY WITH ELECTRICAL INSULATION BETWEEN A ROTATING ELECTRICAL MACHINE AND ITS ELECTRONIC PART

(30) Priorité: 26.06.2017 FR 1755838
(43) Date de publication de la demande: 06.05.2020
(73) Titulaire: Valeo Electrification, 95800 Cergy (FR)
(72) Inventeur: SASSANE, Khalid, 94046 Creteil Cedex (FR); TARRAGO, Jean-Luc, 94046 Creteil Cedex (FR); GODEFROY, Gregory, 94046 Creteil Cedex (FR); MOTTIER, Renaud, 94046 Creteil Cedex (FR)
(74) Mandataire: Valeo Powertrain Systems
(86) Numéro de dépôt international: PCT/EP2018/063376
(87) Numéro de publication internationale: WO 2019/001848

(56) Documents cités:
- WO-A1-2015/033064
- FR-A1- 2 807 218
- US-A- 3 180 922
- US-A1- 2012 205 993

## Description

L'invention concerne notamment un assemblage mécanique avec isolation électrique entre une machine électrique tournante et sa partie électronique notamment pour un véhicule automobile.

L'invention trouve une application particulièrement avantageuse dans le domaine des machines électriques tournantes telles que les alternateurs, les alterno-démarreurs ou encore les machines réversibles. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule automobile.

Une machine électrique tournante comprend une partie machine et une partie électronique. La partie machine comporte principalement un rotor mobile en rotation autour d'un axe de rotation, un stator fixe entourant le rotor et un carter dans lequel sont montés le rotor et le stator. La partie électronique comporte principalement un dissipateur thermique sur lequel peuvent être montés des modules de puissance et/ou un module de commande. Ces modules permettent de piloter l'excitation de la machine et de transformer le courant alternatif sortant des phases du stator en un courant continu.

La partie électronique de la machine électrique tournante est montée sur la partie machine pour simplifier les liaisons électriques des différents modules avec le rotor et le stator ainsi que pour un gain de place au sein du véhicule automobile. Il est donc nécessaire de fixer la partie machine avec la partie électronique. De manière courante pour réaliser cet assemblage, le dissipateur thermique de la partie électronique et le carter de la partie machine comportent, chacun, une portion ajourée permettant le passage d'une vis.

Pour diverses raisons, le dissipateur thermique et le carter peuvent être à des potentiels électriques différents. Il est donc nécessaire de les isoler électriquement l'un de l'autre. Pour cela, on utilise classiquement un premier isolant disposé entre le dissipateur thermique et la vis et un second isolant disposé entre le carter et le dissipateur thermique, chacun des isolants présentant une ouverture pour le passage de la vis. On obtient donc un empilage entre des matériaux métalliques : la vis, le dissipateur thermique et le carter ; et des matériaux plastiques : les deux isolants. Ce genre d'empilage présente l'inconvénient qu'une grande partie du serrage est perdue en particulier lors des variations thermiques vues par le produit tout au long de sa vie. En effet, comme le serrage de la vis est important, il est susceptible de déformer les isolants localement en les écrasant créant ainsi un phénomène de matage. De plus, si les isolants utilisés ont un coefficient de dilatation supérieur à celui des pièces conductrices alors les isolants vont subir des efforts de compression importants avec la variation de la température et se déformer sous l'effet du fluage. Ces phénomènes de matage et de fluage ainsi que la relaxation des matériaux plastiques entraînent une perte d'épaisseur des isolants et par conséquent une diminution du serrage de l'assemblage entre la partie machine et la partie électronique. Cette perte de serrage peut provoquer l'apparition de jeu dans l'assemblage, ce qui se traduit par une mauvaise tenue de la machine électrique tournante en vibration.

Les documents WO 2015/033064 et FR 2807218 décrivent des architectures d'assemblage entre le dissipateur thermique et le carter de machine électrique tournante.

La présente invention vise à permettre d'éviter les inconvénients de l'art antérieur.

A cet effet, la présente invention a donc pour objet une machine électrique tournante pour véhicule automobile selon la revendication 1.

Selon la présente invention, la machine comporte :
- deux parties à assembler formées :
   - d'une partie machine qui comporte un carter et des parties actives logées dans ledit carter ;
   - d'une partie électronique montée sur le carter, ladite partie électronique étant agencée pour piloter la partie machine ; et
- au moins un dispositif d'assemblage s'étendant suivant un axe de fixation, permettant de monter la partie électronique sur la partie machine et comportant :
   - un élément de fixation s'étendant suivant l'axe de fixation,
   - un premier isolant formé d'un matériau électriquement isolant et disposé axialement entre l'élément de fixation et une des parties à assembler,
   - un second isolant formé d'un matériau électriquement isolant et disposé axialement entre la partie machine et la partie électronique.
Toujours selon l'invention, le dispositif d'assemblage comporte, en outre, au moins une plaque disposée en contact avec un des isolants, la plaque étant formée d'un matériau qui présente une dureté supérieure à celle du matériau de l'isolant avec lequel elle est en contact.

L'utilisation d'une plaque renforce la pièce isolante qui est en contact de ladite plaque et permet ainsi une meilleure répartition des efforts dans l'isolant ce qui le protège des déformations locales importantes. Cela permet donc de limiter le phénomène de matage correspondant à l'écrasement de l'isolant lors du serrage de l'élément de fixation. Un meilleur serrage dudit élément de fixation est donc possible. Cela permet de garantir un montage fiable de la partie électronique sur la partie machine.

De plus, l'utilisation de la plaque permet d'utiliser un élément de fixation de plus faible diamètre sans risque de détérioration de l'isolant. Cela permet alors de diminuer la masse et l'encombrement du dispositif d'assemblage et donc de la machine électrique tournante.

Selon une réalisation, la dureté du matériau de la plaque est d'au moins 60 HB et notamment de l'ordre de 150 HV.

Selon une réalisation, la plaque est formée d'un matériau métallique. Selon une réalisation, les isolants sont formés d'un matériau plastique. Par exemple, les isolants peuvent être formés d'un même matériau ou d'un matériau différent.

Selon une réalisation, la plaque est surmoulée dans l'isolant. La plaque forme alors un insert dans le matériau électriquement isolant. En variante, la plaque peut être clipsée ou collée. Toujours en variante, la plaque peut être rapportée à l'isolant, l'isolant et la plaque étant maintenue ensemble via l'élément de fixation.

Selon une réalisation, la partie électronique comporte au moins un module électronique et un dissipateur thermique permettant le refroidissement du module, le dissipateur thermique comportant des zones de fixation avec la partie machine. Par exemple, la partie électronique comporte plusieurs modules de puissance formant un pont redresseur et un module de commande permettant en particulier de piloter l'excitation de la machine.

Selon une réalisation, le carter comporte deux flasques, un des flasques présentant des zones de fixation avec la partie électronique. Par exemple, chacun des flasques comporte une portion plate s'étendant radialement par rapport à un axe de rotation de la machine, la portion plate portant à sa périphérie interne un roulement accouplé avec un arbre de la machine, et une jupe cylindrique s'étendant en saillie axialement à partir d'une périphérie externe de la portion plate vers la jupe cylindrique de l'autre flasque.

Selon une réalisation, la plaque est distincte du carter et du dissipateur thermique.

Selon l'invention, une première plaque est disposée en contact avec le premier isolant. Ainsi, la plaque est disposée axialement entre une des parties à assembler et l'élément de fixation. La partie à assembler peut être le dissipateur thermique ou le carter.

Par exemple, la plaque est disposée en contact avec l'élément de fixation. Autrement dit, la plaque est disposée axialement entre le premier isolant et l'élément de fixation. Cela permet d'améliorer l'effet de non déformation du premier isolant par rapport à si la plaque était en contact avec l'élément à assembler car la surface de contact entre le premier isolant et l'élément de fixation est plus petite que la surface de contact entre ledit isolant et la partie à assembler.

Selon l'invention, une deuxième plaque est disposée en contact avec le second isolant. Ainsi, la plaque est disposée axialement entre la partie machine et la partie électronique. En l'occurrence, la plaque est disposée entre le dissipateur thermique et le carter.

Par exemple, la plaque est disposée en contact avec celle entre la partie machine et la partie électronique qui a la plus petite surface de contact avec le second isolant.

Selon l'invention, le dispositif d'assemblage comporte une première plaque disposée en contact avec le premier isolant et une seconde plaque disposée en contact avec le second isolant.

Selon une réalisation, l'élément de fixation comporte une tête et un corps s'étendant à partir de la tête suivant un axe d'assemblage de manière à traverser des ouvertures ménagées au moins dans la partie électronique et la partie machine.

Selon une réalisation, l'axe d'assemblage s'étend de manière sensiblement parallèle à l'axe de rotation de la machine.

Selon une réalisation, le dissipateur thermique et le carter comporte, chacun, des zones de fixation ajourées permettant le passage de l'élément de fixation. En l'occurrence, la plaque et les isolants comportent, chacun, une ouverture pour le passage du corps de l'élément de fixation.

Selon une réalisation, l'élément de fixation présente une portion qui coopère avec l'ouverture de la partie machine et notamment celle du carter. Par exemple, l'élément de fixation est une vis ou un tirant. En l'occurrence, l'élément de fixation présente une portion filetée qui coopère avec un taraudage de l'ouverture du carter.

Selon une réalisation, la portion filetée peut être recouverte d'un revêtement, couramment appelé frein filet, permettant de garantir la fixation entre le carter et l'élément de fixation.

Selon une réalisation, la plaque présente une forme d'anneau. Dans une variante de réalisation, la plaque peut comprendre plusieurs portions formant un anneau, les portions pouvant être espacées les unes des autres.

Selon une réalisation, le premier isolant comprend un corps et un manchon s'étendant en saillie à partir du corps de manière à entourer au moins partiellement l'élément de fixation. En l'occurrence, le manchon est positionné radialement entre l'élément de fixation et la partie à assembler. Le manchon forme un canon isolant et participe à l'isolation électrique de l'élément de fixation. Par exemple, le manchon s'étend à partir d'une périphérie interne du corps.

Selon une réalisation, le corps du premier isolant s'étend radialement par rapport à l'axe d'assemblage et présente notamment une forme d'anneau. En l'occurrence, la plaque s'étend en contact avec le corps.

Selon une réalisation, des protubérances s'étendent en saillie à partir d'une surface externe du manchon en direction de la pièce à assembler. Ces protubérances permettent le maintien du premier isolant dans la pièce à assembler.

Selon une réalisation, le premier isolant comporte, en outre, une collerette s'étendant en saillie à partir du corps dans une direction opposée à celle dans laquelle s'étend le manchon et s'étendant de manière à entourer au moins partiellement l'élément de fixation. La collerette permet d'améliorer l'isolation électrique entre l'élément de fixation et la pièce à assembler avec lequel il est le plus proche en évitant la formation de ponts salins.

Par exemple, la collerette s'étend à partir d'une périphérie externe du corps. Toujours par exemple, la collerette s'étend de manière à entourer la tête de l'élément de fixation.

Selon une réalisation, le second isolant comporte un corps en forme de plaque et des zones de fixation formés chacune d'une jupe, notamment cylindrique, et d'une partie transversale, notamment ajourée pour le passage de l'élément de fixation. En l'occurrence, la plaque s'étend en contact avec la partie transversale. Par exemple, la jupe peut s'étendre directement à partir du corps ou à partir d'un bras qui s'étend à partir du corps.

Selon une réalisation, le dispositif d'assemblage comporte, en outre, une rondelle conique disposée axialement entre le premier isolant et l'élément de fixation. Une telle rondelle conique permet de compenser la déformation des isolants due à des variations de températures lors du fonctionnement du véhicule. Ainsi, la rondelle permet de compenser les effets du fluage et du matage des matériaux plastiques présent dans la zone d'assemblage et ainsi de garantir, dans le temps, une tension minimale dans l'élément de fixation et donc un bon serrage dudit élément. Ainsi, la tenue mécanique de la fixation entre la partie machine et la partie électronique est améliorée.

Selon une réalisation, la rondelle est en contact avec la plaque et l'élément de fixation.

Selon une réalisation, la rondelle présente une portion interne en contact avec l'élément de fixation et une portion externe en contact avec le premier isolant ou la plaque. Par exemple, la rondelle s'étend dans une direction inclinée par rapport à une direction radiale.

Selon une réalisation, la rondelle est formée d'un matériau dur et notamment un matériau métallique.

Selon une réalisation, le matériau de la rondelle et celui de la plaque sont des matériaux similaires. Cela permet d'éviter le phénomène d'électro-corrosion également appelé « effet pile ».

Selon une réalisation, la rondelle présente des stries s'étendant en saillie vers la plaque. Cela permet d'éviter un desserrage de la vis et ainsi améliorer la tenue mécanique de la fixation entre la partie machine et la partie électronique. En variante, les stries peuvent s'étendre vers l'élément de fixation et en particulier vers la tête dudit élément.

Selon une réalisation, l'un au moins des dispositifs d'assemblage est disposé sur un pourtour extérieur de la machine électrique tournante. En particulier, tous les dispositifs d'assemblage sont disposés sur le pourtour extérieur. Les dispositifs d'assemblages sont ainsi positionnés dans des zones plus accessibles ce qui permet de simplifier la fixation de la partie machine avec la partie électronique.

Les dispositifs d'assemblage d'une même machine électrique peuvent être différents les uns des autres. Chaque dispositif d'assemblage peut comprendre une ou plusieurs réalisations précédemment décrites.

La machine électrique tournante peut, avantageusement, former un alternateur, un alterno-démarreur ou une machine réversible.

La présente invention pourra être mieux comprise à la lecture de la description détaillée qui va suivre, d'exemples de mise en œuvre non limitatifs de l'invention et de l'examen des dessins annexés, sur lesquels :
- la figure 1 représente, schématiquement et partiellement, une vue en coupe, dans un plan comprenant l'axe de rotation, d'une machine électrique tournante selon un exemple de mise en œuvre de l'invention,
- la figure 2 représente, schématiquement et partiellement, une vue en coupe, dans un plan comprenant l'axe d'assemblage, du dispositif d'assemblage de la figure 1,
- la figure 3 représente, schématiquement et partiellement, une vue en perspective d'un exemple d'isolant de la figure 2,
- la figure 4 représente, schématiquement et partiellement, une vue en coupe, dans un plan comprenant l'axe d'assemblage, d'un exemple de rondelle de la figure 2,
- la figure 5 représente, schématiquement et partiellement, une vue en perspective de dessus d'un exemple d'obturateur de la figure 2,
- la figure 6 représente, schématiquement et partiellement, une vue en perspective de dessous de l'obturateur de la figure 5, et
- la figure 7 représente, schématiquement et partiellement, une vue de dessus de la machine électrique tournante de la figure 1.

Les éléments identiques, similaires ou analogues conservent les mêmes références d'une figure à l'autre.

Les modes de réalisation qui sont décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. En particulier toutes les variantes et tous les modes de réalisation décrits sont combinables entre eux si rien ne s'oppose à cette combinaison sur le plan technique. Dans un tel cas, mention serait faite dans la présente description.

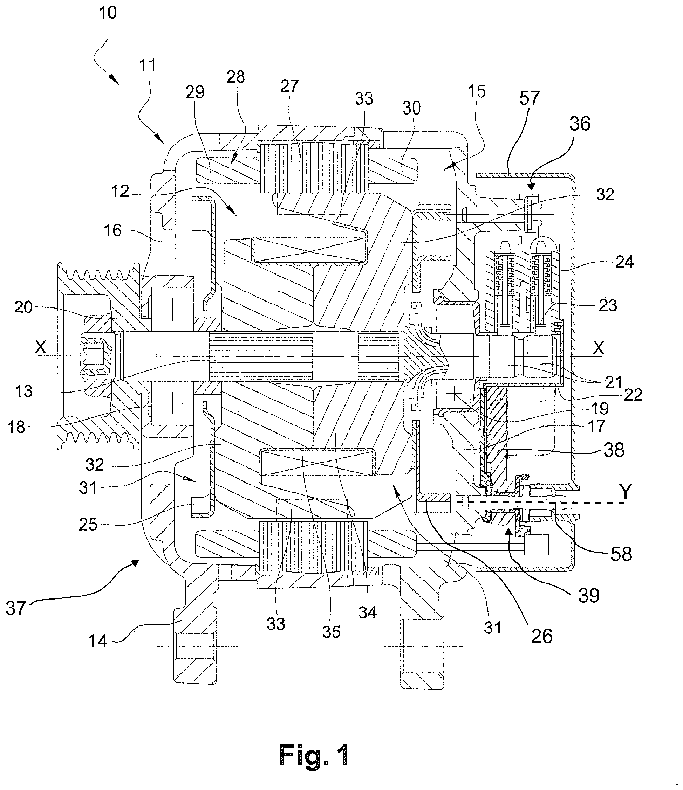

La figure 1 représente une machine électrique tournante 10 compacte et polyphasée, notamment pour véhicule automobile. Cette machine électrique tournante 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur ou une machine réversible. La machine électrique tournante comporte une partie machine 37 et une partie électronique 36.

La partie machine 37 comporte un carter 11. A l'intérieur de ce carter 11, elle comporte, en outre, un arbre 13, un rotor 12 solidaire en rotation de l'arbre 13 et un stator 15 entourant le rotor 12. Le mouvement de rotation du rotor 12 se fait autour d'un axe de rotation X.

Dans la suite de la description, les dénominations avant et arrière se réfèrent à l'axe de rotation X traversant en son centre l'arbre 13. La portion avant correspond à un élément orienté vers la partie avant de l'arbre 13 et donc vers la poulie ou plus proche de la poulie par rapport à un second élément, la dénomination arrière désignant un éloignement de la poulie.

Dans cet exemple, le carter 11 comporte un flasque avant 16 et un flasque arrière 17 qui sont assemblés ensemble. Ces flasques 16, 17 sont de forme creuse et portent, chacun, centralement un palier accouplé à un roulement à billes 18, 19 respectif pour le montage à rotation de l'arbre 13. En outre, le carter 11 comporte des moyens de fixation 14 permettant le montage de la machine électrique tournante 10 dans le véhicule.

Chaque flasque 16, 17 comporte une portion plate s'étendant radialement par rapport à l'axe de rotation X et une jupe cylindrique s'étendant en saillie à partir d'une périphérie externe de la portion plate vers la jupe cylindrique de l'autre flasque.

Une poulie 20 est fixée sur une extrémité avant de l'arbre 13, au niveau du flasque avant 16, par exemple à l'aide d'un écrou en appui sur le fond de la cavité de cette poulie. Cette poulie 20 permet de transmettre le mouvement de rotation à l'arbre 13 ou à l'arbre 13 de transmettre son mouvement de rotation à la courroie.

L'extrémité arrière de l'arbre 13 porte, ici, des bagues collectrices 21 appartenant à un collecteur 22. Des balais 23 appartenant à un porte-balais 24 sont disposés de façon à frotter sur les bagues collectrices 21. Le porte-balais 24 est relié à un régulateur de tension (non représenté).

Le flasque avant 16 et le flasque arrière 17 peuvent comporter, en outre, des ouvertures sensiblement latérales pour le passage de l'air en vue de permettre le refroidissement de la machine électrique tournante par circulation d'air engendrée par la rotation d'un ventilateur avant 25 sur la face avant du rotor 12, c'est-à-dire au niveau du flasque avant 16 et d'un ventilateur arrière 26 sur la face arrière du rotor, c'est-à-dire au niveau du flasque arrière 17.

Dans cet exemple, le rotor 12 est un rotor à griffe. Il comporte deux roues polaires 31. Chaque roue polaire 31 est formée d'un plateau 32 et d'une pluralité de griffes 33 formants des pôles magnétiques. Le plateau 32 est d'orientation transversale par rapport à l'axe de rotation X et présente, par exemple, une forme sensiblement annulaire. Ce rotor 12 comporte, en outre, un noyau 34 cylindrique qui est intercalé entre les roues polaires 31. Ici, ce noyau 34 est formé de deux demi noyaux appartenant chacun à l'une des roues polaires. Le rotor 12 comporte, entre le noyau 34 et les griffes 33, une bobine 35 comportant, ici, un moyeu de bobinage et un bobinage électrique sur ce moyeu. Par exemple, les bagues collectrices 21 appartenant au collecteur 22 sont reliées par des liaisons filaires à ladite bobine 35. Le rotor 12 peut également comporter des éléments magnétiques interposés entre deux griffes 33 adjacentes.

Dans cet exemple de réalisation, le stator 15 comporte un corps 27 en forme d'un paquet de tôles doté d'encoches, par exemple du type semi fermée ou ouverte, équipées d'isolant d'encoches pour le montage d'un bobinage électrique 28. Ce bobinage 28 traverse les encoches du corps 27 et forment un chignon avant 29 et un chignon arrière 30 de part et d'autre du corps du stator. Le bobinage 28 est connecté, par exemple, en étoile ou encore en triangle.

Par ailleurs, le bobinage 28 est formé d'une ou plusieurs phases. Chaque phase comporte au moins un conducteur traversant les encoches du corps de stator 27 et forme, avec toutes les phases, les chignons. Le bobinage 28 est relié électriquement à un ensemble électronique 36.

La partie électronique 36 comporte au moins un module électronique de puissance permettant de piloter une phase du bobinage 28 et un module de commande permettant de piloter l'excitation du rotor. Le module de puissance forme un pont redresseur de tension pour transformer la tension alternative générée par l'alternateur 10 en une tension continue pour alimenter notamment la batterie et le réseau de bord du véhicule en mode alternateur. La partie électronique comporte, en outre, un dissipateur thermique 38 permettant le refroidissement d'au moins un des modules. Par exemple, les modules de puissance sont montés sur le dissipateur thermique.

Lorsque le bobinage électrique est alimenté électriquement à partir des balais, le rotor 12 est magnétisé et devient un rotor inducteur avec formation de pôles magnétiques Nord-Sud au niveau des griffes 33. Ce rotor inducteur crée un courant induit alternatif dans le stator lorsque l'arbre 13 est en rotation. Le pont redresseur transforme alors ce courant induit alternatif en un courant continu, notamment pour alimenter les charges et les consommateurs du réseau de bord du véhicule automobile ainsi que pour recharger sa batterie.

La partie électronique 36 est montée sur la partie machine. En particulier dans l'exemple de réalisation décrit sur la figure 1, le dissipateur thermique 38 de la partie électronique 36 est monté sur le carter 11 de la partie machine 37 et en particulier sur le flasque arrière 17. Pour réaliser cet assemblage, le dissipateur thermique 38 et le carter 11 comporte chacun des zones de fixation respectivement en regard les unes des autres. En particulier dans cet exemple, le flasque arrière 17 comporte plusieurs plots chacun s'étendant en saillie vers la partie électronique et formant une zone de fixation.

Chaque zone d'assemblage comporte un dispositif d'assemblage 39. Le dispositif d'assemblage comporte un élément de fixation 40 s'étendant suivant un axe d'assemblage Y, un premier isolant 41, un second isolant 42 et deux plaques 43, 53.

Dans la suite de la description, les dénominations axiales, radiales, extérieures et intérieures se réfèrent à l'axe d'assemblage Y traversant en son centre l'élément de fixation 40. La direction axiale correspond à l'axe Y alors que les orientations radiales correspondent à des plans concourants, et notamment perpendiculaires, à l'axe Y. Pour les directions radiales, les dénominations externe ou interne s'apprécient par rapport au même axe Y, la dénomination interne correspondant à un élément orienté vers l'axe, ou plus proche de l'axe par rapport à un second élément, la dénomination externe désignant un éloignement de l'axe. Dans l'exemple de la figure 1, l'axe d'assemblage Y s'étend de manière sensiblement parallèle à l'axe de rotation X de la machine électrique tournante 10. Dans l'ensemble de la description et dans les revendications, on entend par « sensiblement parallèle » un angle compris entre 0° et 20°.

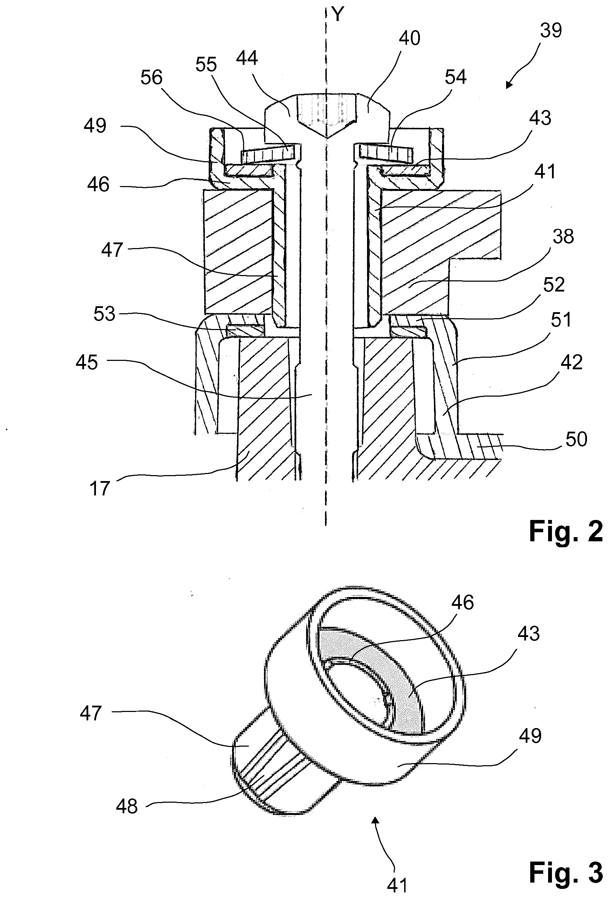

Dans l'exemple de la figure 2, l'élément de fixation 40 comporte une tête 44 et un corps 45 s'étendant à partir de la tête suivant l'axe d'assemblage Y. Dans cet exemple, l'élément de fixation 40 est une vis. Dans une variante, cet élément pourrait être un tirant ou tout autre moyen de fixation adapté.

Le dissipateur thermique 38, le flasque arrière 17, la première plaque 43 et les isolants 41, 42 comportent, chacun, une ouverture permettant le passage de l'élément de fixation 40. Dans cet exemple de réalisation, l'élément de fixation 40 est inséré dans le dissipateur thermique 38 puis dans le carter 11. Ainsi, la tête 44 dudit élément est positionnée axialement du côté du dissipateur thermique et le corps 45 dudit élément de fixation présente une portion qui coopère avec l'ouverture du carter 11 pour assurer la fixation des deux éléments. En l'occurrence, le corps 45 présente une portion filetée qui coopère avec un taraudage de l'ouverture du carter 11. La portion filetée peut être recouverte d'un revêtement, couramment appelé frein filet, faisant office de colle pour garantir la fixation.

Le dissipateur thermique 38 et le flasque arrière 17 sont formés chacun d'un matériau électriquement conducteur tel que l'aluminium. Ces deux éléments ne sont pas nécessairement au même potentiel électrique, il est donc nécessaire des les isoler électriquement. Par exemple, la carter 11 est à un potentiel de masse châssis ou 12V et le dissipateur thermique est à un potentiel de masse du réseau électrique avec lequel fonctionne la machine 10 qui est notamment un réseau électrique 48V. De plus, l'élément de fixation est par exemple formé d'acier qui est également un matériau électriquement conducteur qu'il faut isoler.

Dans l'exemple des figures 2 et 3, le premier isolant 41 présente un corps 46 s'étendant radialement par rapport à l'axe d'assemblage Y et présentant notamment une forme d'anneau pour le passage de l'élément de fixation 40. Le corps 46 est disposé axialement entre l'élément de fixation 40 et le dissipateur thermique 38.

Toujours dans cet exemple, le premier isolant 41 comprend un manchon 47 s'étendant en saillie à partir du corps 46 dans une direction sensiblement parallèle au corps 45 de l'élément de fixation 40. Le manchon 47 présente une forme de cylindre entourant le corps 45. Le manchon s'étend radialement entre le corps 45 et le dissipateur thermique 38 et s'étend à partir d'une périphérie interne du corps 46 de l'isolant. On comprendra que la hauteur axiale du manchon 47 dépend de la longueur du dissipateur thermique 38 à isoler.

Comme bien visible sur la figure 3, le premier isolant 41 comprend des protubérances 48 s'étendent saillie à partir d'une surface externe du manchon en direction du dissipateur thermique 38. Ces protubérances 48 peuvent s'étendre axialement sur toute la longueur du manchon 47. Par exemple, le premier isolant 41 comporte trois protubérances 48 espacées de manière sensiblement régulière sur la périphérie du manchon 47 notamment espacées de 120° les unes des autres. Par exemple, chaque protubérance peut présenter une section de forme rectangulaire ou encore une section de forme triangulaire comme illustré sur la figure 3.

Toujours dans cet exemple, le premier isolant 41 comporte une collerette 49 s'étendant en saillie à partir du corps 46 de l'isolant 41 dans une direction opposée à la direction dans laquelle s'étend le manchon 47. Par exemple, la collerette s'étend dans une direction sensiblement axiale de manière à entourer au moins partiellement l'élément de fixation 40 et en particulier la tête 44 dudit élément. Par exemple, la collerette s'étend à partir d'une périphérie externe du corps 46. On comprendra que la hauteur de la collerette dépend des dimensions de la tête 44.

Dans l'exemple des figures 2, 5 et 6, le second isolant 42 est disposé axialement entre la partie machine 37 et la partie électronique 36 c'est-à-dire entre le dissipateur thermique 38 et le flasque arrière 17. Le second isolant 42 comporte un corps 50 en forme de plaque et des zones de fixation qui sont chacune formée d'une jupe 51 et d'une partie transversale 52. La jupe 51 présente, ici, une forme cylindrique notamment de révolution et s'étend en saillie à partie du corps dans une direction axiale. La partie transversale 52 s'étend à partie de la jupe dans une direction sensiblement radiale et est, ici, ajourée pour le passage de l'élément de fixation 40. Par exemple, la jupe 51 peut s'étendre directement à partir du corps 50 mais elle pourrait également s'étendre à partir d'un bras qui s'étendrait à partir du corps 50. La jupe 51 et la partie transversale 52 viennent recouvrir les plots s'étendant du flasque arrière 17 pour former les zones de fixation.

Le premier isolant 41 et le second isolant 42 sont tous les deux formés d'un matériau électriquement isolant. Par exemple, ces isolants sont formés d'un matériau plastique notamment thermoplastique ou thermodurcissable tel que du PEEK. Les isolants peuvent être formés d'un même matériau ou chacun d'un matériau différent.

Comme visible sur l'exemple de la figure 2, le dispositif d'assemblage 39 comporte une première plaque 43 et une seconde plaque 53. La première plaque est disposée en contact avec le premier isolant 41 et la seconde plaque 53 est disposée en contact avec le second isolant 42.

La première plaque 43 est formée d'un matériau qui présente une dureté supérieure à la dureté du matériau formant le premier isolant 41. De plus, la seconde plaque 53 est formée d'un matériau qui présente une dureté supérieure à la dureté du matériau formant le second isolant 42. Par exemple, la dureté du matériau de la plaque est d'au moins 60 HB, dans le cadre d'une mesure avec l'échelle Brinell, et notamment de l'ordre de 150 HV, dans le cadre d'une mesure de type Vickers.

Par exemple, les plaques sont formées d'un matériau métallique tel que de l'acier ou l'aluminium. Elles peuvent être formées d'un même matériau ou de matériaux différents.

Par exemple, chaque plaque 43, 53 est surmoulée dans l'isolant 41, 42 avec lequel elle est en contact.

Dans l'exemple représenté ici, chaque plaque 43, 53 présente une forme d'anneau présentant une ouverture pour le passage de l'élément de fixation 40. Chaque plaque présente, ici, une forme cylindrique mais toute autre forme peut être envisagée.

La première plaque 43 est disposée axialement entre le dissipateur thermique 38 et l'élément de fixation 40 et en particulier entre le premier isolant 41 et ledit élément 40. La plaque 43 est surmoulée dans le corps 46 du premier isolant 41.

La seconde plaque 53 est disposée axialement entre le dissipateur thermique 38 et le flasque arrière 17 et en particulier entre le second isolant 42 et le flasque arrière 17. La plaque 43 est surmoulée dans le la portion transversale 52 du second isolant 42.

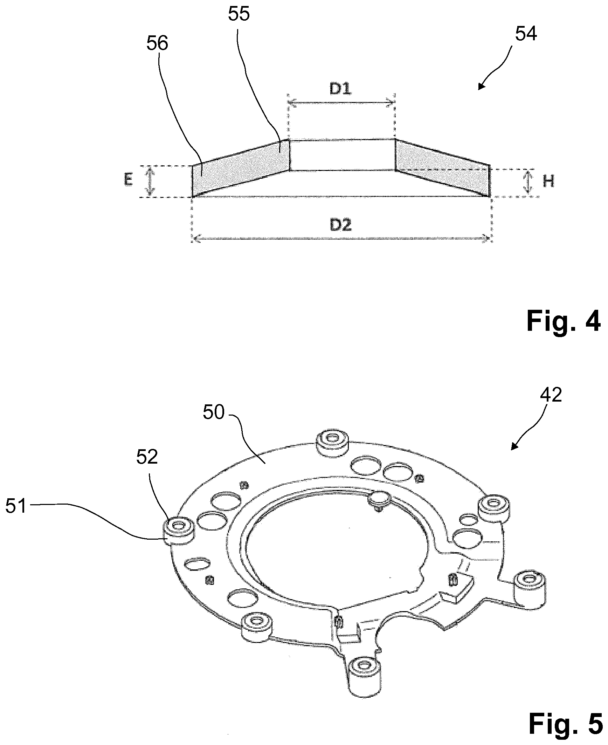

Dans l'exemple illustré sur les figures 2 et 4, le dispositif d'assemblage 39 comporte, en outre, une rondelle conique 54 disposée axialement entre le premier isolant 41 et l'élément de fixation 40 et en particulier entre la première plaque 43 et ledit élément 40. La rondelle 54 présente une portion interne 55 en contact avec l'élément de fixation 40 et une portion externe 56 en contact avec la première plaque 43. Par exemple, la rondelle 54 est une rondelle Belleville.

Par exemple, la rondelle s'étend dans une direction inclinée par rapport à une direction radiale et présente centralement une ouverture pour le passage de l'élément de fixation 40. Une telle rondelle présente un effet élastique, c'est-à-dire que lors du serrage de l'élément de fixation 40 pour la fixation, elle est dans un état contraint dans lequel la portion interne 55 et la portion externe 56 peuvent être sensiblement alignées dans une direction radiale par rapport à l'axe d'assemblage Y. Puis, avec l'usure de la machine principalement en raison du fluage des isolants 41, 42, la rondelle 54 est dans un état de compensation dans lequel la portion interne 55 et la portion externe 56 ne sont plus alignées dans la direction radiale.

On comprendra que les dimensions de la rondelle dépendent principalement du serrage souhaité, des dimensions et des matériaux formant les isolants 41, 42, des dimensions de l'élément de fixation 40 et de la présente de plaque 43, 53 ainsi que de leurs dimensions et matériaux respectifs. Par exemple, la rondelle peut présenter un diamètre externe D2 compris entre 7 mm et 15 mm, un diamètre interne D1 compris entre 3 mm et 5 mm, une épaisseur E dans une direction axiale de l'ordre de 0,8 mm et une course utile axiale comprise entre 0 mm et 1 mm pour une plage d'effort allant de 500 N à 5000 N, la course utile étant la différence de hauteur axiale entre la portion interne et la portion externe de la rondelle entre l'état contraint et l'état de compensation maximal.

La rondelle 54 est formée d'un matériau dur notamment métallique. Par exemple, la rondelle est en acier.

Dans un exemple de réalisation non représentée, la rondelle peut présenter des stries s'étendant en saillie vers la plaque et/ou vers la tête 44 de l'élément de fixation 40.

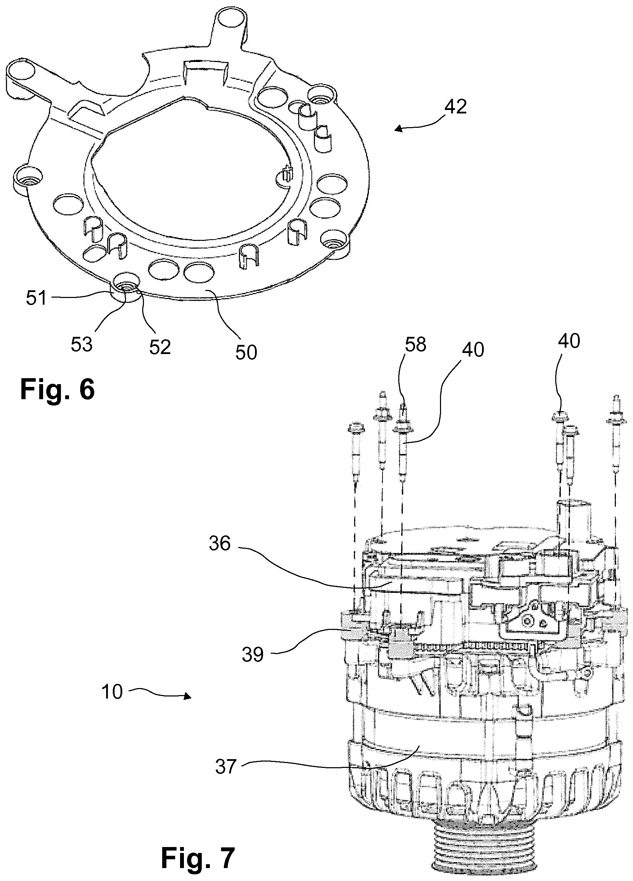

Comme représenté sur la figure 7, tous les dispositifs d'assemblage 39 sont disposés sur un pourtour extérieur de la machine électrique tournante 10. La machine 10 comprend, ici, six dispositifs d'assemblage 39 qui sont répartis angulairement le long de la circonférence de la machine. Les dispositifs d'assemblage d'une même machine électrique peuvent être différents les uns des autres. Chaque dispositif d'assemblage peut comprendre une ou plusieurs réalisations précédemment décrites.

En outre, comme bien visible sur la figure 1, la machine électrique tournante 10 comporte un capot 57 notamment formé d'une matière plastique permettant de protéger la partie électronique 36. Par exemple, ce capot 57 est fixé sur la machine par des goujons 58 disposés respectivement sur certaines têtes 44 des éléments de fixation 40.

La présente invention trouve des applications en particulier dans le domaine des alternateurs ou des machines réversibles pour véhicule automobile mais elle pourrait également s'appliquer à tout type de machine tournante.

Bien entendu, la description qui précède a été donnée à titre d'exemple uniquement et ne limite pas le domaine de la présente invention dont on ne sortirait pas en remplaçant les différents éléments par tous autres équivalents.

Par exemple, on ne sortira pas du cadre de l'invention en n'utilisant qu'une seule des deux plaques 41, 43. De même, on ne sortira pas du cadre de l'invention en positionnant le dispositif d'assemblage 39 de manière à ce que l'axe d'assemblage Y soit sensiblement orthogonal à l'axe de rotation X de la machine 10. De même, on ne sortira pas du cadre de l'invention en insérant l'élément de fixation d'abord dans le flasque arrière 17 puis dans le dissipateur thermique 38 de manière à ce que la tête 44 dudit élément 40 soit plus proche du flasque que du dissipateur.

## Revendications

1. Machine électrique tournante pour véhicule automobile, ladite machine (10) comportant :
- deux parties à assembler formées :
- d'une partie machine (37) qui comporte un carter (11) et des parties actives (12, 15) logées dans ledit carter ;
- d'une partie électronique (36) montée sur le carter (11), ladite partie électronique étant agencée pour piloter la partie machine (37) ; et
- au moins un dispositif d'assemblage (39) s'étendant suivant un axe de fixation (Y), permettant de monter la partie électronique sur la partie machine et comportant :
- un élément de fixation (40) s'étendant suivant l'axe de fixation (Y),
- un premier isolant (41) formé d'un matériau électriquement isolant et disposé axialement entre l'élément de fixation (40) et la partie électronique (36),
- un second isolant (42) formé d'un matériau électriquement isolant et disposé axialement entre la partie machine (37) et la partie électronique (36), le dispositif d'assemblage (39) comportant, en outre, une première plaque (43) disposée en contact avec le premier isolant (41) et disposée axialement entre ledit premier isolant (41) et l'élément de fixation (40) et une seconde plaque (53) disposée en contact avec le second isolant (42), les plaques étant formées chacune d'un matériau qui présente une dureté supérieure à celle du matériau de l'isolant avec lequel elle est en contact.

2. Machine selon la revendication 1, **caractérisée en ce que** la dureté du matériau d'au moins une des plaques (43, 53) est d'au moins 60 HB et notamment de l'ordre de 150 HV.

3. Machine selon la revendication 1 ou 2, **caractérisée en ce qu'**au moins une des plaques (43, 53) est formée d'un matériau métallique.

4. Machine selon l'une quelconque des revendications 1 à 3, **caractérisée en ce qu'**au moins une des plaques (43, 53) est surmoulée dans l'isolant (41, 42).

5. Machine selon l'une quelconque des revendications 1 à 4, **caractérisée en ce que** le premier isolant (41) comprend un corps (46) et un manchon (47) s'étendant en saillie à partir du corps (46) de manière à entourer au moins partiellement l'élément de fixation (40).

6. Machine selon la revendication 5, **caractérisée en ce que** des protubérances (48) s'étendent en saillie à partir d'une surface externe du manchon (47) en direction de la pièce à assembler (36, 37).

7. Machine selon la revendication 5 ou 6, **caractérisée en ce que** le premier isolant (41) comporte, en outre, une collerette (49) s'étendant en saillie à partir du corps (46) dans une direction opposée à celle dans laquelle s'étend le manchon (47) et s'étendant de manière à entourer au moins partiellement l'élément de fixation (40).

8. Machine selon l'une quelconque des revendications 1 à 7,
**caractérisée en ce que** la seconde plaque (53) est disposée en contact avec celle entre la partie machine (37) et la partie électronique (36) qui a la plus petite surface de contact avec le second isolant (42).

9. Machine selon l'une quelconque des revendications 1 à 8, **caractérisée en ce que** le dispositif d'assemblage (39) comporte, en outre, une rondelle (54) conique disposée axialement entre le premier isolant (41) et l'élément de fixation (40).

10. Machine selon la revendication 9, **caractérisée en ce que** la rondelle (54) est en contact avec la plaque (43) et l'élément de fixation (40).

11. Machine selon l'une quelconque des revendications 1 à 10, **caractérisée en ce que** la partie électronique (36) comporte au moins un module électronique et un dissipateur thermique (38) permettant le refroidissement du module, le dissipateur thermique comportant des zones de fixation avec la partie machine (37) et **en ce que** le carter (11) comporte deux flasques (16, 17), un des flasques présentant des zones de fixation avec la partie électronique (36).

## Patentansprüche

1. Rotierende elektrische Maschine für Kraftfahrzeuge, wobei die Maschine (10) umfasst:
- zwei zusammenzufügende Teile, die gebildet sind aus:
- einem Maschinenteil (37), das ein Gehäuse (11) und in diesem Gehäuse untergebrachte aktive Teile (12, 15) umfasst;
- einem auf dem Gehäuse (11) montierten Elektronikteil (36), wobei der Elektronikteil zur Steuerung des Maschinenteils (37) ausgelegt ist; und
- mindestens einer Montagevorrichtung (39), die sich entlang einer Befestigungsachse (Y) erstreckt, die Montage des Elektronikteils auf dem Maschinenteil ermöglicht und umfasst:
- ein Befestigungselement (40), das sich entlang der Befestigungsachse (Y) erstreckt,
- einen ersten Isolator (41), der aus einem elektrisch isolierenden Material besteht und axial zwischen dem Befestigungselement (40) und dem elektronischen Teil (36) angeordnet ist,
- einen zweiten Isolator (42), der aus einem elektrisch isolierenden Material besteht und axial zwischen dem Maschinenteil (37) und dem elektronischen Teil (36) angeordnet ist,
wobei die Verbindungsvorrichtung (39) außerdem eine erste Platte (43), die in Kontakt mit dem ersten Isolator (41) und axial zwischen dem ersten Isolator (41) und dem Befestigungselement (40) angeordnet ist, und eine zweite Platte (53) umfasst, die in Kontakt mit dem zweiten Isolator (42) angeordnet ist, wobei die Platten jeweils aus einem Material bestehen, das eine höhere Härte aufweist als das Material des Isolators, mit dem sie in Kontakt steht.

2. Maschine nach Anspruch 1, **dadurch gekennzeichnet, dass** die Härte des Materials mindestens einer der Platten (43, 53) mindestens 60 HB und insbesondere in der Größenordnung von 150 HV beträgt.

3. Maschine nach Anspruch 1 oder 2, **dadurch gekennzeichnet, dass** mindestens eine der Platten (43, 53) aus einem metallischen Material gebildet ist.

4. Maschine nach einem der Ansprüche 1 bis 3, **dadurch gekennzeichnet, dass** mindestens eine der Platten (43, 53) in die Isolierung (41, 42) eingegossen ist.

5. Maschine nach einem der Ansprüche 1 bis 4, **dadurch gekennzeichnet, dass** die erste Isolierung (41) einen Körper (46) und eine Hülse (47) umfasst, die sich vom Körper (46) so vorstehend erstreckt, dass sie das Befestigungselement (40) zumindest teilweise umgibt.

6. Maschine nach Anspruch 5, **dadurch gekennzeichnet, dass** Vorsprünge (48) von einer Außenfläche der Hülse (47) in Richtung des zu verbindenden Teils (36, 37) vorstehen.

7. Maschine nach Anspruch 5 oder 6, **dadurch gekennzeichnet, dass** der erste Isolator (41) außerdem einen Kragen (49) aufweist, der sich vom Körper (46) in einer Richtung entgegengesetzt zu der Richtung, in der sich die Hülse (47) erstreckt, vorsteht und so verläuft, dass er das Befestigungselement (40) zumindest teilweise umgibt (40) zumindest teilweise umschließt.

8. Maschine nach einem der Ansprüche 1 bis 7, **dadurch gekennzeichnet, dass** die zweite Platte (53) in Kontakt mit dem Teil zwischen dem Maschinenteil (37) und dem Elektronikteil (36) angeordnet ist, der die kleinste Kontaktfläche mit dem zweiten Isolator (42) aufweist.

9. Maschine nach einem der Ansprüche 1 bis 8, **dadurch gekennzeichnet, dass** die Verbindungsvorrichtung (39) zusätzlich eine konische Unterlegscheibe (54) umfasst, die axial zwischen dem ersten Isolator (41) und dem Befestigungselement (40) angeordnet ist.

10. Maschine nach Anspruch 9, **dadurch gekennzeichnet, dass** die Unterlegscheibe (54) mit der Platte (43) und dem Befestigungselement (40) in Kontakt steht.

11. Maschine nach einem der Ansprüche 1 bis 10, **dadurch gekennzeichnet, dass** der elektronische Teil (36) mindestens ein elektronisches Modul und einen Kühlkörper (38) zur Kühlung des Moduls umfasst, wobei der Kühlkörper Befestigungsbereiche mit dem Maschinenteil (37) aufweist, und dass das Gehäuse (11) zwei Flansche (16, 17) aufweist, wobei einer der Flansche Befestigungsbereiche mit dem elektronischen Teil (36) aufweist.

## Claims

1. Rotating electrical machine for a motor vehicle, said machine (10) comprising:
- two parts to be assembled, formed by:
- a machine part (37) comprising a casing (11) and active parts (12, 15) housed in said casing;
- an electronic part (36) mounted on the casing (11), said electronic part being arranged to control the machine part (37); and
- at least one assembly device (39) extending along a fixing axis (Y), allowing the electronic part to be mounted on the machine part and comprising:
- a fixing element (40) extending along the fixing axis (Y),
- a first insulator (41) made of an electrically insulating material and disposed axially between the fixing element (40) and the electronic part (36),
- a second insulator (42) made of an electrically insulating material and disposed axially between the machine part (37) and the electronic part (36),
the assembly device (39) further comprising a first plate (43) disposed in contact with the first insulator (41) and disposed axially between said first insulator (41) and the fastening element (40) and a second plate (53) disposed in contact with the second insulator (42), the plates each being made of a material which has a hardness greater than that of the insulating material with which it is in contact.

2. Machine according to claim 1, **characterised in that** the hardness of the material of at least one of the plates (43, 53) is at least 60 HB and in particular in the order of 150 HV.

3. Machine according to claim 1 or 2, **characterised in that** at least one of the plates (43, 53) is made of a metallic material.

4. Machine according to any of claims 1 to 3, **characterised in that** at least one of the plates (43, 53) is moulded into the insulator (41, 42).

5. Machine according to any of claims 1 to 4, **characterised in that** the first insulator (41) comprises a body (46) and a sleeve (47) extending protruding from the body (46) so as to at least partially surround the fastening element (40).

6. Machine according to claim 5, **characterised in that** protrusions (48) extend from an outer surface of the sleeve (47) towards the part to be assembled (36, 37).

7. Machine according to claim 5 or 6, **characterised in that** the first insulator (41) further comprises a flange (49) projecting from the body (46) in a direction opposite to that in which the sleeve (47) extends and extending so as to at least partially surround the fastening element (40).

8. Machine according to any of claims 1 to 7, **characterised in that** the second plate (53) is arranged in contact with that between the machine part (37) and the electronic part (36) which has the smallest contact surface with the second insulator (42).

9. Machine according to any of claims 1 to 8, **characterised in that** the assembly device (39) further comprises a conical washer (54) arranged axially between the first insulator (41) and the fastening element (40).

10. Machine according to claim 9, **characterised in that** the washer (54) is in contact with the plate (43) and the fastening element (40).

11. Machine according to any of claims 1 to 10, **characterised in that** the electronic part (36) comprises at least one electronic module and a heat sink (38) for cooling the module, the heat sink comprising fastening areas with the machine part (37) and **in that** the housing (11) comprises two flanges (16, 17), one of the flanges having fastening areas with the electronic part (36).
